# EUROPÄISCHE PATENTSCHRIFT

(11) **EP 3 171 746 B1**
(45) Veröffentlichungstag und Bekanntmachung des Hinweises auf die Patenterteilung: **29.05.2019**
(21) Anmeldenummer: 15733743.7
(22) Anmeldetag: 02.07.2015
(51) Int. Cl.: A47J 31/60, A47L 15/42, D06F 39/00

(54) **HAUSHALTSGERÄT MIT EINEM FLÜSSIGKEITSSPEICHER**
HOUSEHOLD APPLIANCE COMPRISING A LIQUID RESERVOIR
APPAREIL ÉLECTROMÉNAGER DOTÉ D'UN RÉSERVOIR DE LIQUIDE

(30) Priorität: 23.07.2014 DE 102014214349
(43) Veröffentlichungstag der Anmeldung: 31.05.2017
(73) Patentinhaber: BSH Hausgeräte GmbH, 81739 München (DE)
(72) Erfinder: SCHAUB, Hartmut, 14656 Brieselang (DE); BISCHOF, Andreas, 10407 Berlin (DE)
(86) Internationale Anmeldenummer: PCT/EP2015/065102
(87) Internationale Veröffentlichungsnummer: WO 2016/012215

(56) Entgegenhaltungen:
- WO-A1-2005/051157
- WO-A1-2013/045294
- DE-A1-102011 078 530
- US-A1- 2014 060 590

## Beschreibung

Die vorliegende Erfindung betrifft ein Haushaltsgerät mit einem Flüssigkeitsspeicher, der einen Innenbereich zum Aufnehmen von Wasser umfasst.

In wasserführenden Anlagen und Haushaltsgeräten wird oftmals Wasser gespeichert, um zu einem bestimmten Zeitpunkt zur Nutzung zur Verfügung zu stehen. Das Wasser kann schon zu Beginn der Speicherung Mikroorganismen enthalten, oder nachträglich von Mikroorganismen aus der Luft oder anderen Komponenten des Haushaltsgeräts kontaminiert werden. Mikroorganismen sind mikroskopisch kleine Lebewesen, die Einzeller und Mehrzeller, wie z.B. Algen, Archaea, Amöben, Flagellaten, Bakterien, Protozoen und Viren umfassen. Die im Wasser vorhandenen Mikroorganismen sind für die Bildung eines Biofilms in einem Flüssigkeitsspeicher in Haushaltsgeräten verantwortlich. Ein Biofilm besteht aus einer Schleimschicht mit Matrixstruktur, die extrazelluläre polymere Substanzen umfasst, und die in Verbindung mit Wasser Hydrogele bildet. Ein Biofilm kann unter anderem Polysaccharide, Proteine, Lipide und Nukleinsäuren enthalten.

Aus hygienischen Gründen ist die Bildung eines Biofilms in Haushaltsgeräten nicht gewünscht. Da die Biofilmbildung meist nicht komplett zu unterbinden ist, muss ein in Haushaltsgeräten entstandener Biofilm in verschiedenen Zeitintervallen durch geeignete Verfahren entfernt werden. Falls sich der entstandene Biofilm in einen eingetrockneten Biofilm umgewandelt hat, ist dieser Biofilm durch gängige Reinigungsverfahren nur sehr schwer zu entfernen. Ein eingetrockneter Biofilm bildet sich bevorzugt an den Oberflächen von Haushaltsgeräten, die sowohl mit Wasser als auch mit Luft in Berührung kommen. Dies ist meist der Fall, wenn sich im Flüssigkeitsspeicher unterschiedliche Wasserstände befinden. Beim Absinken des Wasserstands trocknet der an der Innenoberfläche des Flüssigkeitsspeichers entstandene Biofilm durch den Kontakt mit Luft aus. Wenn ein eingetrockneter Biofilm durch einen steigenden Wasserstand wieder befeuchtet wird, und anschließend erneut austrocknet, dann verfestigt sich der eingetrocknete Biofilm nochmals und kann weitaus schwerer entfernt werden. Durch den im Wasser vorhandenen Kalk kann ein eingetrockneter Biofilm feste Kalkpartikel enthalten, wodurch der eingetrocknete Biofilm nochmals schwerer entfernt werden kann.

Um hygienisch einwandfreie Zustände in wasserführenden Anlagen zu erreichen, werden unterschiedliche mechanische Lösungen verwendet. Rohrleitungen werden z.B. mittels Molch gereinigt, wohingegen schlecht zugängliche Volumenspeicher durch speziell geformte Bürsten gesäubert werden. Rohrleitungen können alternativ auch durch einen Wasserstrahl gereinigt werden, der abrasive Festkörper enthält. Die genannten Lösungen sind allerdings nur mit einem hohen Aufwand und mit hohen Kosten umzusetzen und scheiden daher für den Einsatz in Haushaltsgeräten aus. Bei der Reinigung von Flüssigkeitsspeichern in Haushaltsgeräten, wie z.B. in Waschmaschinen, Kaffeemaschinen und Wasserkochern, wird oftmals Wasser mit chemischen Reinigern, wie z.B. Spülmittel, eingesetzt.

Aus WO 2005/051157 A1 ist eine Geschirrspülmaschine mit einem System zur Wasseraufbereitung umfassend einen Wasseraufbereitungsbehälter bekannt, der zumindest einen Teil der während des Spülbetriebs der Geschirrspülmaschine verwendeten Spülflüssigkeit aufnehmen kann, wobei im Wasseraufbereitungsbehälter während einer Wasseraufbereitungsphase mit Hilfe von Mikroorganismen die in der Spülflüssigkeit enthaltenen Verunreinigungen zumindest teilweise biologisch abgebaut werden.

Aus DE 10 2011 078 530 A1 ist eine Geschirrspülmaschine mit einem zur Aufnahme von Spülgut dienenden Spülbehälter und mindestens einem zur temporären Speicherung von Spülflotte dienenden Flottenspeicher mit wenigstens einer Zuführöffnung zur Einleitung von Gasblasen eines Behandlungsgases bekannt, wobei im Flottenspeicher über der Zuführöffnung mindestens eine die Verweildauer der Gasblasen in der Spülflotte erhöhende Schikane angeordnet ist.

Aus US 2014/0060590 A1 ist eine Geschirrspülmaschine mit einem Spülgutbehälter und einem Vorratsbehälter zur Aufnahme von Waschwasser bekannt, wobei zusätzlich zu einem Mikrofilter am Wasserauslass des Spülgutbehälters ein weiterer Filter vor dem Wassereinlass des Vorratsbehälters vorgesehen ist.

Aus WO 2013/045294 A1 ist ein wasserführendes Haushaltsgerät mit einem Behälter zur Aufnahme von zu reinigenden Gegenständen und mindestens einer eine katalytisch wirksame Substanz enthaltenden inneren Oberfläche bekannt, wobei die katalytisch wirksame Substanz ein Polyoxometallat ist und die innere Oberfläche beim Betrieb des Haushaltsgeräts mit Wasser in Kontakt kommt.

Es ist die der Erfindung zugrundeliegende Aufgabe, ein Haushaltsgerät anzugeben, bei dem ein sich in einem Flüssigkeitsspeicher gebildeter Biofilm entfernt werden kann.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Haushaltsgerät mit einem Flüssigkeitsspeicher gelöst, der einen Innenbereich zum Aufnehmen von Wasser umfasst bei dem der Innenbereich schwimmfähige Körper zum Entfernen eines Biofilms an einer Innenoberfläche des Innenbereichs des Flüssigkeitsspeichers umfasst. Dadurch wird der technische Vorteil erreicht, dass ein Biofilm, der sich im Laufe der Zeit an einer Innenoberfläche bilden kann, durch die abrasiven Eigenschaften der schwimmfähigen Körper entfernt werden kann. Die schwimmfähigen Körper sind von reibender oder schleifender Wirkung und reinigen dadurch bei einer mechanischen Bewegung von Wasser im Flüssigkeitsspeicher die Innenoberfläche.

Unter einem Haushaltsgerät wird ein Gerät verstanden, das zur Haushaltsführung eingesetzt wird. Dies kann ein Haushaltsgroßgerät sein, wie beispielsweise eine Waschmaschine, ein Wäschetrockner, eine Geschirrspülmaschine, oder ein Kältegerät, wie z.B. ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat, eine Küchenmaschine oder ein Staubsauger.

Durch die schwimmfähigen Körper kann der Biofilm, neben einer Innenoberfläche des Flüssigkeitsspeichers, auch von der Oberfläche von Wasser im Flüssigkeitsspeicher entfernt werden. Prinzipiell kann sich ein Biofilm auch auf der Wasseroberfläche im Flüssigkeitsspeicher bilden. Ein an der Wasseroberfläche entstandener Biofilm wird jedoch
durch die an der Wasseroberfläche treibenden schwimmfähigen Körper durchstoßen. Eine Ausbildung des Biofilms wird zudem durch die Bewegung der schwimmfähigen Körper an der Wasseroberfläche unterbunden. Dadurch wird der technische Vorteil erreicht, dass ein Biofilm entfernt wird, bevor sich eine eingetrocknete Biofilmschicht auf einer Innenoberfläche des Innenbereichs des Flüssigkeitsspeichers absetzen kann, die sehr viel schwerer zu entfernen ist.

Die schwimmfähigen Körper können eine harte Oberfläche aufweisen. Dadurch wird der technische Vorteil erreicht, dass die abrasiven Eigenschaften der schwimmfähigen Körper verstärkt werden und ein Biofilm wirksam entfernt werden kann.

Die schwimmfähigen Körper können eine Kugelform aufweisen. Da sich kugelförmige Körper sehr gut als Schüttgut eignen, wird dadurch der technische Vorteil erreicht, dass die Körper effektiv in den Flüssigkeitsspeicher eines Haushaltsgeräts eingefüllt werden können. Dies ermöglicht die Verwendung von schwimmfähigen Körpern in kleinen und verwinkelten Flüssigkeitsspeichern, in den z.B. eckige Körper miteinander verkanten können und dadurch die Zufuhr zum Speicher blockieren können.

Die kugelförmigen Körper können eine glatte Oberfläche aufweisen, die keine unregelmäßige Form umfasst. Dies hat den Vorteil, dass sich ein Biofilm an der glatten Oberfläche der kugelförmigen Körper nur sehr schwer absetzen kann. Dadurch wird verhindert, dass die kugelförmigen Körper miteinander verkleben.

Die kugelförmigen Körper können als Hohlkugeln ausgestaltet sein, die entweder mit Wasser oder Luft gefüllt sein können. Durch die Verwendung von mit Wasser gefüllten Kugeln wird der technische Vorteil erreicht, dass sich die Gesamtmasse der schwimmfähigen Körper erhöht. Dies führt zu einer erhöhten mechanischen Kraft der schwimmfähigen Körper auf den sich an einer Innenoberfläche des Flüssigkeitsspeichers befindenden Biofilm und dadurch zu einer besseren Ablösung des Biofilms. Durch die Verwendung von mit Luft gefüllten Hohlkugeln wird der technische Vorteil erreicht, dass ein Kunststoff mit größerer Dichte als Wasser zur Herstellung der Kugeln verwendet werden kann. Hierbei wird durch die Luftkammern in den Kugeln erreicht, dass die Gesamtdichte der schwimmfähigen Körper geringer als die Dichte von Wasser ist. Aus diesem Grund kann dennoch die Schwimmfähigkeit der schwimmfähigen Körper gewährleistet werden.

Die schwimmfähigen Körper können eine unregelmäßige Form aufweisen. Eine unregelmäßige Form ist jede Form, die von einer geometrischen Figur, wie z.B. Kugel, Würfel, Quader oder Prisma, abweicht. Eine unregelmäßige Form kann Vorsprünge, Ausbuchtungen, Kanten und/oder Ecken aufweisen. Darüber hinaus kann die Oberfläche einer unregelmäßigen Form aufgeraut sein, oder es können sich in der Oberfläche der unregelmäßigen Form Aussparungen und/oder Öffnungen befinden. Durch die unregelmäßige Form wird der technische Vorteil erreicht, dass die abrasiven Eigenschaften der schwimmfähigen Körper verbessert werden können. Die verbesserten abrasiven Eigenschaften der Körper führen zu einer stärkeren Reibung der schwimmfähigen Körper auf einer Innenoberfläche des Flüssigkeitsspeichers, was zu einer effektiven Entfernung des Biofilms führt.

Die schwimmfähigen Körper können aus körnigen Granulatpartikeln gebildet sein. Granulatpartikel bestehen aus Körnern, die eine makroskopische Größe haben und die mittels Reibungskraft wechselwirken. Die Granulatpartikel lassen sich aufgrund ihrer guten Lagerfähigkeit und Ihrer guten Eigenschaften als Schüttgut effektiv in den Flüssigkeitsspeicher eines Haushaltsgeräts einfüllen. Aufgrund der geringen Größe der körnigen Granulatpartikel kann beispielsweise der technische Vorteil erreicht werden, dass die Partikel auch in kleinen, verwinkelten und mit Einbuchtungen versehenen Flüssigkeitsspeichern verwendet werden können.

Die schwimmfähigen Körper können schwammartig ausgebildet sein. Ein schwammartiger Körper ist entweder aus dem feinfaserigen Skelett einer bestimmten biologischen Schwammart oder aus einem künstlich hergestellten Poren-enthaltenden Material hergestellt. Ein schwammartiger Körper ist ein weicher, elastischer Gegenstand, der optional Öffnungen enthalten kann, und über eine große Saugfähigkeit verfügt. Die Verwendung von schwammartigen Körpern hat den technischen Vorteil, dass der Körper aufgrund seiner Elastizität auch in Verbindung mit Wasser durch Zuführleitungen in den Flüssigkeitsspeicher zugegeben werden kann, da sich seine Form der Umgebung anpasst.

Die schwimmfähigen Körper können aus Kunststoff oder Gestein bestehen. Kunststoffe umfassen gängige Kunststoffe, wie Thermoplaste, Duroplaste und Elastomere, die durch ihre technischen Eigenschaften, wie Formbarkeit, Härte, Elastizität, Bruchfestigkeit, Temperatur-, Wärme-, und chemische Beständigkeit gekennzeichnet sind. Gestein umfasst Mineralien, Gläser, Metalle und Metalllegierungen, vulkanisches Glas, Eis, Sand und Kohle. Schwimmfähige Körper können Kunststoffkugeln oder Glaskugeln sein. Schwimmfähige Körper können mit Luft oder Wasser gefüllte Kunststoffkugeln oder mit Luft oder Wasser gefüllte Glaskugeln sein. Durch die Verwendung von Kunststoffen und Gestein in der Herstellung von schwimmfähigen Körpern wird beispielsweise der technische Vorteil erreicht, dass die Körper hinsichtlich der mechanischen Anforderungen an die spezifische Beschaffenheit des entsprechenden Flüssigkeitsspeichers angepasst werden können. Einerseits können aus Gestein bestehende schwimmfähige Körper mit scharfen Kanten sehr gute abrasive Eigenschaften aufweisen und dadurch einen entstandenen Biofilm wirksam entfernen. Andererseits können schwimmfähige Körper aus Kunststoff mit einer glatten Oberfläche vorteilhaft in einem Flüssigkeitsspeicher aus weichem Kunststoff verwendet werden, da die Oberfläche des Flüssigkeitsspeichers durch die schwimmfähigen Körper nicht beschädigt wird.

Die schwimmfähigen Körper können eine geringere Dichte als die Dichte von Wasser aufweisen. Dadurch wird der technische Vorteil erreicht, dass die schwimmfähigen Körper eigenständig auf der Wasseroberfläche treiben, ohne dass Hilfsmittel, wie z.B. Luftkammern, bei der Herstellung in die schwimmfähigen Körper eingebracht werden müssen.

Die schwimmfähigen Körper können eine poröse Oberfläche zur Bindung des Biofilms aufweisen. Eine poröse Oberfläche umfasst eine spezifische Oberfläche zwischen 100 m²/g und 2000 m²/g. Durch eine poröse Oberfläche wird der technische Vorteil erreicht, dass die schwimmfähigen Körper selbst an den Biofilm binden können und sich dadurch der Biofilm auf den schwimmfähigen Körper absetzt. Durch die abrasive Wirkung der schwimmfähigen Körper untereinander kann der darauf gebundene Biofilm wieder effektiv von den schwimmfähigen Körpern entfernt werden.

Das Haushaltsgerät kann eine Pumpe zum Bewegen von Wasser in dem Flüssigkeitsspeicher aufweisen. Die Pumpe kann eine Umwälzpumpe sein. Durch die Verwendung einer Pumpe zum Bewegen von Wasser im Flüssigkeitsspeicher wird der technische Vorteil erreicht, dass die mechanische Bewegung des Wassers die schwimmfähigen Körper wirksam bewegt. Dadurch können die schwimmfähigen Körper einen Großteil der Innenoberfläche des Flüssigkeitsspeichers erreichen. Durch die Bewegung des Wassers werden die abrasiven Eigenschaften der schwimmfähigen Körper zusätzlich verstärkt und der Biofilm kann effektiv entfernt werden.

Die Pumpe kann in den Flüssigkeitsspeicher des Haushaltsgeräts integriert sein. Die Pumpe kann direkt oder durch ein oder mehrere weitere Bauteile mit der Oberseite, Unterseite und/oder mit einer oder mehreren Seitenwänden des Flüssigkeitsspeichers verbunden sein. Dadurch wird der technische Vorteil erreicht, dass der Flüssigkeitsspeicher im Haushaltsgerät platzsparend und kostengünstig verbaut werden kann.

Die Pumpe kann so ausgebildet sein, damit Wasser in dem Flüssigkeitsspeicher umgewälzt werden kann. Die Umwälzung der Flüssigkeit kann direkt im Flüssigkeitsspeicher erfolgen. Die Umwälzung kann mittels einer externen Pumpe erfolgen, die das Wasser durch eine Zuleitung in den Flüssigkeitsspeicher leitet und durch eine Ableitung wieder aus dem Flüssigkeitsspeicher ableitet. Dadurch wird der technische Vorteil erreicht, dass das Wasser ausreichend stark bewegt wird und damit die schwimmfähigen Körper einen Großteil der Innenoberfläche des Flüssigkeitsspeichers erreichen können. Dadurch kann ein möglichst großer Bereich des Biofilms von einer Innenoberfläche des Flüssigkeitsspeichers entfernt werden.

Das Haushaltsgerät kann eine Filtereinheit zum Filtern von Wasser umfassen. Die Filtereinheit kann ein Säulenfilter, Porenfilter oder jedes andere dem Fachmann zugängliche Filtersystem umfassen. Die Filtereinheit kann so ausgestaltet sein, dass sie die schwimmfähigen Körper zurückhält. Die Filtereinheit kann so ausgestaltet sein, dass sie im Wasser vorhandene Schmutzpartikel zurückhält. Die Filtereinheit kann so ausgestaltet sein, dass sie im Wasser vorhandene Mikroorganismen zurückhält. Dadurch wird der technische Vorteil erreicht, dass die Funktionsfähigkeit der Pumpe durch die sich im Wasser befindenden schwimmfähigen Körper oder durch Schmutzpartikel nicht beeinträchtigt wird. Darüber hinaus kann durch die Verwendung einer speziellen Filtereinheit für Mikroorganismen die Zahl der Mikroorganismen im Wasser reduziert werden. Dies führt wiederum zu einer Reduktion der Menge des durch die Mikroorganismen erzeugten Biofilms.

Das Haushaltsgerät kann eine Temperaturerfassungseinrichtung zum Erfassen einer Wassertemperatur umfassen. Die Temperaturerfassungseinrichtung kann eine in allen technischen Geräten übliche Einrichtung zur Erfassung von Wasser- und Flüssigkeitstemperaturen sein. Die Temperaturerfassungseinrichtung kann zudem ein Bauteil enthalten, das die Temperatur von Wasser im Flüssigkeitsspeicher reguliert. Durch die Verwendung der Temperaturerfassungseinrichtung wird der technische Vorteil erreicht, dass die Bildung eines Biofilms verhindert oder verlangsamt werden kann. Bei einer Wassertemperatur von ca. 30°C bis 40°C weisen die im Wasser vorhandenen Mikroorganismen eine erhöhte Aktivität auf und produzieren eine große Menge an Biofilm. Somit kann entweder durch eine Reduktion der Temperatur im Flüssigkeitsspeicher unter 30°C oder durch eine Erhöhung der Temperatur über 40°C die Menge des von Mikroorganismen erzeugten Biofilms im Flüssigkeitsspeicher reduziert oder verhindert werden.

Das Haushaltsgerät kann einen Füllstandsensor zum Erfassen eines Wasserstands umfassen. Der Füllstandsensor kann eine in allen technischen Geräten verwendete Einheit zur Erfassung und/oder Regulierung von Wasserständen sein. Sich ändernde Wasserstände im Flüssigkeitstank begünstigen die Bildung von Biofilm in unterschiedlichen Bereichen einer Innenoberfläche des Flüssigkeitsspeichers. Durch die Verwendung eines Füllstandsensors wird der technische Vorteil erreicht, dass sich der Biofilm nur in begrenzten Bereichen einer Innenoberfläche im Flüssigkeitsspeicher bilden kann.

Gemäß einem zweiten Aspekt der Erfindung wird die Aufgabe durch ein Verfahren zum Entfernen eines Biofilms an einer Innenoberfläche des Innenbereichs in einem Flüssigkeitsspeicher eines Haushaltsgeräts gelöst. Das Verfahren ist dadurch gekennzeichnet, dass der Flüssigkeitsspeicher schwimmfähige Körper und Wasser enthält, und dass der Biofilm von einer Innenoberfläche des Flüssigkeitsspeichers durch Bewegung der schwimmfähigen Körper entfernt wird. Dadurch wird der technische Vorteil erreicht, dass ein Biofilm, der sich im Laufe der Zeit an einer Innenoberfläche bilden kann, durch die abrasive Eigenschaften der schwimmfähigen Körper entfernt werden kann. Die schwimmfähigen Körper sind von reibender oder schleifender Wirkung und reinigen dadurch bei einer mechanischen Bewegung des Wassers im Flüssigkeitsspeicher die Innenoberfläche.

Die Bewegung der schwimmfähigen Körper kann durch eine Pumpe zum Bewegen von Wasser erzeugt werden. Dies hat den technischen Vorteil, dass eine Pumpe eine ausreichende Bewegung von Wasser im Flüssigkeitsspeicher erzeugt. Die Bewegung von Wasser überträgt sich wiederum auf die schwimmfähigen Körper, die dadurch effektiv den Biofilm von einer Innenoberfläche des Flüssigkeitstanks entfernen können.

Die Bewegung der schwimmfähigen Körper kann durch das einströmende Wasser beim Befüllen des Flüssigkeitsspeichers erzeugt werden. Dies hat den technischen Vorteil, dass bei einem erstmaligen Befüllen des Flüssigkeitsspeichers mit Wasser die Bewegung des Wassers auf die schwimmfähigen Körper übertragen wird. Durch die Bewegung der schwimmfähigen Körper kann wiederum der Biofilm von einer Innenoberfläche des Flüssigkeitstanks entfernt werden. Die Entfernung des Biofilms gelingt ausschließlich durch das Befüllen des Flüssigkeitstanks mit Wasser, ohne dass eine Pumpe zum Bewegen von Wasser zwangsläufig benötigt wird. Dies spart Platz in dem Haushaltsgerät und führt zu einer Reduktion des verbrauchten Stroms.

Dem Wasser im Flüssigkeitsspeicher kann eine chemisch oder biologisch wirksame Substanz zugegeben werden. Die chemisch wirksame Substanz kann z.B. ein Waschmittel sein. Die biologisch wirksame Substanz kann z.B. ein Biozid sein, das Mikroorganismen zerstört. Dadurch wird beispielsweise der technische Vorteil erreicht, dass die Menge der Mikroorganismen im Flüssigkeitsspeicher reduziert wird, wodurch sich auch die Menge des von Mikroorganismen produzierten Biofilms reduziert.

Ausführungsbeispiele der Erfindung sind in den Zeichnungen dargestellt und werden im Folgenden näher beschrieben.

Es zeigen:
- Fig. 1: eine schematische Ansicht eines Haushaltsgeräts
- Fig. 2: eine Ansicht eines Flüssigkeitsspeichers

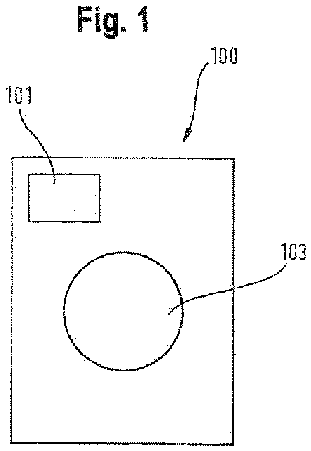

Fig. 1 zeigt eine schematische Ansicht einer Waschmaschine stellvertretend für ein allgemeines Haushaltsgerät 100. Das Haushaltgerät 100 umfasst eine Tür 103 zum Beladen des Haushaltsgerätes 100 mit Wäsche. Das Haushaltsgerät 100 umfasst einen Vorratsbehälter 101, in den Waschmittel oder andere flüssige Substanzen eingefüllt werden können.

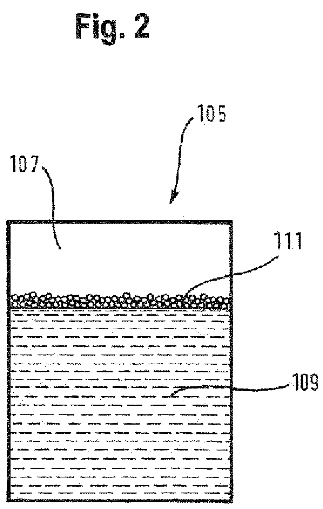

Fig. 2 zeigt eine Ansicht eines Flüssigkeitsspeichers 105 im Haushaltsgerät 100. Der Flüssigkeitsspeicher 105 umfasst einen Innenbereich 107 zum Aufnehmen von Wasser 109. Der Innenbereich 107 umfasst schwimmfähige Körper 111. Wenn der Innenbereich 107 des Flüssigkeitsspeichers 105 mit Wasser 109 gefüllt ist, dann treiben die schwimmfähigen Körper 111 auf der Wasseroberfläche. Der Innenbereich 107 des Flüssigkeitsspeichers 105 umfasst eine Innenoberfläche an der sich ein Biofilm bilden kann.

Die Biofilmbildung ist in den Bereichen der Innenoberfläche des Flüssigkeitsspeichers 105 am größten, die abwechselnd von Wasser bedeckt oder unbedeckt sind. Bei unterschiedlichen Wasserständen im Flüssigkeitsspeicher 105 kommt es an den Grenzflächen zwischen Wasser 109 und Innenoberfläche des Flüssigkeitsspeichers 105 zu besonders intensiven und schwer zu entfernenden Biofilmablagerungen. Werden dem Wasser schwimmfähige Körper 111 zugesetzt, so treiben diese an der Wasseroberfläche. An der Wasseroberfläche kann der Biofilm entstehen, bevor er sich auf einer Innenoberfläche des Innenbereichs 107 des Flüssigkeitsspeichers 105 ablagert. Durch Wasserbewegung, wie z.B. durch die Bewegung des Flüssigkeitsspeichers 105 im Haushaltsgerät 110 oder durch eine Umwälzung des Wassers 109, schlagen die schwimmfähigen Körper 111 an die Innenoberfläche des Flüssigkeitsspeichers 105. Dies führt zu einer Übertragung von starken mechanischen Kräften von den schwimmfähigen Körpern auf den sich an der Innenoberfläche abgesetzten Biofilm. Der Biofilm wird dadurch in einer effektiven Weise abgeschabt, was durch herkömmliche Reinigungsverfahren alleine nicht erreicht werden kann.

Das sich im Flüssigkeitsspeicher 105 befindende Wasser 109, das optional auch Reinigungsmittel enthalten kann, kann mittels einer geeigneten Pumpe umgewälzt werden. Die Umwälzung des Wassers 109 führt zu einer Bewegung der schwimmfähigen Körper 111. Durch die Bewegung können die schwimmfähigen Körper 111 und die sich optional im Wasser befindenden chemisch wirksamen Substanzen einen Großteil der Innenoberfläche des Flüssigkeitsspeichers 105 erreichen.

Die schwimmfähigen Körper 111 können eine poröse Oberfläche aufweisen. Eine poröse Oberfläche umfasst eine spezifische Oberfläche der schwimmfähigen Körper 111 zwischen 100 m²/g und 2000 m²/g. Dafür können die schwimmfähigen Körper 111 aus Mineralien gefertigt sein. Durch die poröse Oberfläche der schwimmfähigen Körper 111 kommt es zu einer wirksamen Bindung zwischen dem sich im Flüssigkeitsspeicher 105 befindenden Biofilm und den schwimmfähigen Körpern 111. Durch den ständigen Kontakt zwischen den schwimmfähigen Körpern 111 untereinander und die dadurch entstehende Reibung, wird der an den Körpern gebundene Biofilm wieder abgerieben und kann somit wirksam entfernt werden.

Die Hauptvorteile der Anwendung der beschriebenen Technologie liegen darin, dass der Biofilm schon in einem sehr frühen Stadium bei der Bildung im Flüssigkeitsspeicher 105 entfernt werden kann. Dadurch dass die schwimmfähigen Körper 111 an der Wasseroberfläche treiben, befinden Sie sich automatisch an der Stelle im Flüssigkeitsspeicher 105, wo eine anfängliche Biofilmbildung am wahrscheinlichsten ist und am schnellsten stattfinden kann. Somit kann durch die schwimmfähigen Körper 111 die Entstehung einer Biofilmschicht schon in der Anfangsphase verhindert werden. Dies hat zur Folge, dass nicht der gesamte Flüssigkeitsspeicher 105 mit schwimmfähigen Körpern 111 ausgestattet werden muss. Es muss vielmehr nur die Menge verwendet werden, die ausreicht um die Wasseroberfläche mit schwimmfähigen Körpern 111 zu bedecken. Aus diesem Grund kommt es zu einem geringen Volumenverlust des Wassers 109 im Flüssigkeitsspeicher 105. Beim Befüllen und Entleeren des Flüssigkeitsspeichers 105 werden zudem auch andere Stellen einer Innenoberfläche des Flüssigkeitsspeichers 105 gereinigt.

Der konstruktive Aufwand zum Einbringen von schwimmfähigen Körpern 111 in den Flüssigkeitsspeicher 105 ist sehr gering. Die schwimmfähigen Körper 111 können nach der Montage des Haushaltsgeräts vor Einfüllen von Wasser 109 in den Flüssigkeitsspeicher 105 eingebracht werden. Die schwimmfähigen Körper 111 können auch in einem nachfolgenden Schritt zusammen mit Wasser 109 eingefüllt werden.

Ein weiterer Vorteil bei der Verwendung von schwimmfähigen Körper 111 im Flüssigkeitsspeicher 105 ist, dass die schwimmfähigen Körper 111 meist einen sehr viel kleineren Durchmesser als der Durchmesser der verwendeten Wasserleitungen und Speicher haben. Deshalb können die schwimmfähigen Körper 111 in sehr kleinen und ungleichmäßig geformten Leitungen und Speichern verwendet werden, da sie ansonsten unzugängliche Stellen erreichen können. Dies ist gegenüber herkömmlichen Reinigungsverfahren, wie z.B. einem Reinigungsmolch, von Vorteil. Zudem ist der Energieaufwand bei der Reinigung extrem gering, da lediglich ein Umwälzen der Flüssigkeit erforderlich ist, um die schwimmfähigen Körper 111 in Bewegung zu versetzen.

Die Geometrie der schwimmfähigen Körpern 111 kann frei gewählt werden. Die Körper 111 können eine unregelmäßige Form aufweisen. Es können schwimmfähige Körper 111 aus körnigen Granulatpartikeln eingesetzt werden. Die schwimmfähigen Körper 111 können aus Kunststoff oder Gestein bestehen. Es können schwimmfähige Körper 111 in Kugelform eingesetzt werden. Die Kugeln können gleiche oder unterschiedliche Radien aufweisen. Die schwimmfähigen Körper 111 können mit Wasser oder mit Luft gefüllte Kunststoff- oder Glaskugeln sein. Die Kugeln können eine glatte Oberfläche aufweisen, die die Bildung eines Biofilms auf der Oberfläche der Kugeln verhindert. Die Kugeln können aufgrund ihrer runden Form einen großen Bereich der Innenoberfläche des Flüssigkeitsspeichers 105 erreichen. Es können auch schwimmfähige Körper 111 eingesetzt werden, die schwammartig ausgebildet sind.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Haushaltsgerät
- 101: Vorratsbehälter
- 103: Tür
- 105: Flüssigkeitsspeicher
- 107: Innenbereich
- 109: Wasser
- 111: Schwimmfähige Körper

## Patentansprüche

1. Haushaltsgerät (100) mit einem Flüssigkeitsspeicher (105), der einen Innenbereich (107) zum Aufnehmen von Wasser (109) umfasst, wobei der Innenbereich (107) schwimmfähige Körper (111) umfasst, **dadurch gekennzeichnet, dass** die schwimmfähigen Körper (111) zum Entfernen eines Biofilms durch Bewegung an einer Innenoberfläche des Innenbereichs (107) des Flüssigkeitsspeichers (105) geeignet sind.

2. Haushaltsgerät (100) nach Anspruch 1, **dadurch gekennzeichnet, dass** die schwimmfähigen Körper (111) eine Kugelform aufweisen oder schwammartig ausgebildet sind.

3. Haushaltsgerät (100) nach Anspruch 1, **dadurch gekennzeichnet, dass** die schwimmfähigen Körper (111) eine unregelmäßige Form aufweisen.

4. Haushaltsgerät (100) nach Anspruch 3, **dadurch gekennzeichnet, dass** die schwimmfähigen Körper (111) aus körnigen Granulatpartikeln gebildet sind.

5. Haushaltsgerät (100) nach einem der vorangehenden Ansprüche, **dadurch gekennzeichnet, dass** die schwimmfähigen Körper (111) aus Kunststoff oder Gestein gebildet sind.

6. Haushaltsgerät (100) nach einem der vorangehenden Ansprüche, **dadurch gekennzeichnet, dass** die schwimmfähigen Körper (111) eine geringere Dichte als die Dichte von Wasser (109) aufweisen.

7. Haushaltsgerät (100) nach einem der vorangehenden Ansprüche, **dadurch gekennzeichnet, dass** das Haushaltsgerät (100) eine Pumpe zum Bewegen von Wasser (109) in dem Flüssigkeitsspeicher (105) umfasst.

8. Haushaltsgerät (100) nach Anspruch 7, **dadurch gekennzeichnet, dass** die Pumpe in den Flüssigkeitsspeicher (105) integriert ist.

9. Haushaltsgerät (100) nach Anspruch 7 oder 8, **dadurch gekennzeichnet, dass** die Pumpe ausgebildet ist, um Wasser (109) in dem Flüssigkeitsspeicher (105) umzuwälzen.

10. Haushaltsgerät (100) nach einem der vorangehenden Ansprüche, **dadurch gekennzeichnet, dass** das Haushaltsgerät (100) eine Filtereinheit zum Filtern von Wasser (109) umfasst.

11. Haushaltsgerät (100) nach einem der vorangehenden Ansprüche, **dadurch gekennzeichnet, dass** der Flüssigkeitsspeicher (105) eine Temperaturerfassungseinrichtung zum Erfassen einer Wassertemperatur umfasst.

12. Haushaltsgerät (100) nach einem der vorangehenden Ansprüche, **dadurch gekennzeichnet, dass** der Flüssigkeitsspeicher (105) einen Füllstandsensor zum Erfassen eines Wasserstands umfasst.

13. Verfahren zum Entfernen eines Biofilms an einer Innenoberfläche des Innenbereichs (107) in einem Flüssigkeitsspeicher (105) eines Haushaltsgeräts (100), wobei der Flüssigkeitsspeicher (105) schwimmfähige Körper (111) und Wasser (109) enthält, **dadurch gekennzeichnet, dass** der Biofilm von einer Innenoberfläche des Flüssigkeitsspeichers (105) durch Bewegung der schwimmfähigen Körper (111) entfernt wird.

14. Verfahren nach Anspruch 13, **dadurch gekennzeichnet, dass** die Bewegung der schwimmfähigen Körper (111) durch eine Pumpe zum Bewegen von Wasser (109) erzeugt wird.

15. Verfahren nach Anspruch 13, **dadurch gekennzeichnet, dass** die Bewegung der schwimmfähigen Körper (111) durch das einströmende Wasser beim Befüllen des Flüssigkeitsspeichers (105) erzeugt wird.

## Claims

1. Household appliance (100) having a liquid reservoir (105) which comprises an inner volume (107) for holding water (109), wherein said inner volume (107) comprises floating members (111), **characterised in that** the floating members (111) are suitable for removing a biofilm by moving on an inner surface of the inner volume (107) of the liquid reservoir (105).

2. Household appliance (100) according to claim 1, **characterised in that** the floating members (111) have a spherical form or are designed to be sponge-like.

3. Household appliance (100) according to claim 1, **characterised in that** the floating members (111) have an irregular form.

4. Household appliance (100) according to claim 3, **characterised in that** the floating members (111) are formed from granular particles.

5. Household appliance (100) according to one of the preceding claims, **characterised in that** the floating members (111) are formed from plastics material or stone.

6. Household appliance (100) according to one of the preceding claims, **characterised in that** the floating members (111) have a lower density than the density of water (109).

7. Household appliance (100) according to one of the preceding claims, **characterised in that** the household appliance (100) comprises a pump for moving water (109) in the liquid reservoir (105).

8. Household appliance (100) according to claim 7, **characterised in that** the pump is integrated in the liquid reservoir (105).

9. Household appliance (100) according to claim 7 or 8, **characterised in that** the pump is designed to circulate water (109) in the liquid reservoir (105).

10. Household appliance (100) according to one of the preceding claims, **characterised in that** the domestic appliance (100) comprises a filter unit for filtering water (109).

11. Household appliance (100) according to one of the preceding claims, **characterised in that** the liquid reservoir (105) comprises a temperature detection device for detecting a water temperature.

12. Household appliance (100) according to one of the preceding claims, **characterised in that** the liquid reservoir (105) comprises a level sensor for detecting a water level.

13. Method for removing a biofilm from an inner surface of the inner volume (107) in a liquid reservoir (105) of a household appliance (100), wherein the liquid reservoir (105) contains floating members (111) and water (109), **characterised in that** the biofilm is removed from an inner surface of the liquid reservoir (105) by movement of the floating members (111).

14. Method according to claim 13, **characterised in that** the movement of the floating members (111) is generated by a pump for moving water (109).

15. Method according to claim 13, **characterised in that** the movement of the floating members (111) is generated by the inflowing water when the liquid reservoir (105) is filled.

## Revendications

1. Appareil électroménager (100) avec un réservoir de liquide (105) qui comprend une zone interne (107) destinée à la réception d'eau (109), dans lequel la zone interne (107) comprend des corps flottants (111), **caractérisé en ce que** les corps flottants (111) sont adéquats pour le retrait d'un biofilm par le biais d'un mouvement au niveau d'une surface interne de la zone interne (107) du réservoir de liquide (105).

2. Appareil électroménager (100) selon la revendication 1, **caractérisé en ce que** les corps flottants (111) présentent une forme de sphère ou sont réalisés à la manière d'une éponge.

3. Appareil électroménager (100) selon la revendication 1, **caractérisé en ce que** les corps flottants (111) présentent une forme irrégulière.

4. Appareil électroménager (100) selon la revendication 3, **caractérisé en ce que** les corps flottants (111) sont formés à partir de particules de granulés en grains.

5. Appareil électroménager (100) selon l'une des revendications précédentes, **caractérisé en ce que** les corps flottants (111) sont formés à partir de matière plastique ou de minéral.

6. Appareil électroménager (100) selon l'une des revendications précédentes, **caractérisé en ce que** les corps flottants (111) présentent une densité plus faible que la densité de l'eau (109).

7. Appareil électroménager (100) selon l'une des revendications précédentes, **caractérisé en ce que** l'appareil ménager (100) comprend une pompe destinée à imprimer un mouvement à l'eau (109) dans le réservoir de liquide (105).

8. Appareil électroménager (100) selon la revendication 7, **caractérisé en ce que** la pompe est intégrée dans le réservoir de liquide (105).

9. Appareil électroménager (100) selon la revendication 7 ou 8, **caractérisé en ce que** la pompe est configurée pour faire circuler de l'eau (109) dans le réservoir de liquide (105).

10. Appareil électroménager (100) selon l'une des revendications précédentes, **caractérisé en ce que** l'appareil électroménager (100) comprend une unité filtrante destinée à filtrer l'eau (109).

11. Appareil électroménager (100) selon l'une des revendications précédentes, **caractérisé en ce que** le réservoir de liquide (105) comprend un dispositif de détection de température destiné à détecter une température de l'eau.

12. Appareil électroménager (100) selon l'une des revendications précédentes, **caractérisé en ce que** le réservoir de liquide (105) comprend un capteur de niveau de remplissage destiné à détecter un niveau d'eau.

13. Procédé destiné au retrait d'un biofilm d'une surface interne de la zone interne (107) dans un réservoir de liquide (105) d'un appareil électroménager (100), dans lequel le réservoir de liquide (105) contient des corps flottants (111) et de l'eau (109), **caractérisé en ce que** le biofilm est retiré d'une surface interne du réservoir de liquide (105) par le biais d'un mouvement des corps flottants (111).

14. Procédé selon la revendication 13, **caractérisé en ce que** le mouvement des corps flottants (111) est généré par le biais d'une pompe destinée à imprimer un mouvement à l'eau (109).

15. Procédé selon la revendication 13, **caractérisé en ce que** le mouvement des corps flottants (111) est généré par le biais de l'eau entrante au moment du remplissage du réservoir de fluide (105).
